# FASCICULE DE BREVET EUROPEEN

(11) **EP 1 057 236 B1**
(45) Date de publication et mention de la délivrance du brevet: **28.04.2004**
(21) Numéro de dépôt: 99902635.4
(22) Date de dépôt: 10.02.1999
(51) Int. Cl.: H02J 9/06

(54) **SYSTEME D'ALIMENTATION ELECTRIQUE PERMETTANT DE SIMPLIFIER L'ARCHITECTURE DES INSTALLATIONS D'ENERGIE ET DE CLIMATISATION**
ELEKTRISCHES VERORGUNGSSYSTEM ZUR VEREINFACHUNG DER ARCHITEKTUR VON ENERGIE- UND KLIMAANLAGEN
ELECTRIC POWER SUPPLY SYSTEM FOR SIMPLIFYING THE ARCHITECTURE OF POWER AND AIR CONDITIONING INSTALLATIONS

(30) Priorité: 16.02.1998 FR 9801845
(43) Date de publication de la demande: 06.12.2000
(73) Titulaire: FRANCE TELECOM, 75015 Paris (FR)
(72) Inventeur: REVOL, René, F-91160 Longjumeau (FR)
(74) Mandataire: Peaucelle, Chantal
(86) Numéro de dépôt international: PCT/FR1999/000294
(87) Numéro de publication internationale: WO 1999/041821

(56) Documents cités:
- EP-A- 0 734 113
- GB-A- 2 184 903
- CHIGOLET J C ET AL: "LES TURBO-ALTERNATEURS: SOURCE DE SECOURS DE HAUTE DISPONIBILITE" INTERNATIONAL TELECOMMUNICATIONS ENERGY CONFERENCE. (INTELEC), PARIS, SEPT. 27 - 30, 1993, vol. 1, no. CONF. 15, 27 septembre 1993, pages 298-302, XP000496158 SOCIETE DES ELECTRICIENS ET DES ELECTRONICIENS

## Description

La présente invention est relative à un système d'alimentation sans interruption suivant le préambule de la revendication 1, destiné à des équipements sensibles, alimentés à partir du réseau public de distribution d'énergie et devant produire une tension équivalente en cas d'interruptions ou de perturbations du réseau public.

Elle vise notamment à permettre l'alimentation des équipements de télécommunications ou d'équipements informatiques, ou plus généralement tout équipement à usage industriel qui n'accepte ni interruption de service, ni de micro-coupure.

Les équipements couramment rencontrés dans le secteur des télécommunications sont généralement alimentés en courant continu sous une tension de 48 volts ou en courant alternatif sous une tension de 230 volts. Cette tension alternative provient du réseau local de distribution d'électricité qui est généralement secouru par un groupe électrogène, de manière permanente, en fonction du type de système alimenté.

Les chaînes d'alimentation comportent de façon classique trois niveaux de conversion différents :
- un niveau primaire avec un poste de transformation haute tension/basse tension, un groupe électrogène et un tableau de distribution de la basse tension ;
- un niveau secondaire avec des redresseurs et des batteries d'accumulateurs qui constituent une source d'énergie de 48 volts ;
- un niveau tertiaire centralisé avec des onduleurs de puissance qui délivrent une tension alternative de 230 volts.

Le niveau primaire est généralement situé au sein de locaux techniques (cave, sous-sol, locaux annexes) distants des salles d'équipements qui comportent le niveau secondaire et le niveau tertiaire.

Les batteries d'accumulateurs ont été fiabilisées par l'emploi de batteries étanches et d'organes de surveillance informatique qui scrutent les modes de défaillance.

L'architecture des chaînes d'alimentation de la génération actuelle doit évoluer en raison des mutations constatées dans les équipements :
- la part croissante des équipements présentant une interface d'alimentation 230V/50Hz, au détriment de l'interface 48V,
- la réduction importante de la puissance consommée par les équipements de télécommunications,
- l'aptitude des équipements à fonctionner aux températures extrêmes sans incidence sur leur durée de vie et sur la qualité du service.

Ces facteurs d'évolution conduisent à privilégier des systèmes d'alimentation de deuxième génération, basés sur une architecture comportant des Alimentations Sans Interruption (ASI) au détriment des sources 48V et des onduleurs.

On connaît par le brevet français 2 693 052 ou par le document CHIGOLET JC et Al. des chaînes d'alimentation de la nouvelle génération dont le principe de fonctionnement exploite une technique d'énergie optimisée et répartie. Cette technique permet :
- de séparer les fonctions d'alimentation et de stockage d'énergie dans les ASI de type "OFF LINE" pour optimiser la gestion des batteries afin d'accroître leur durée de vie,
- d'améliorer le rendement énergétique de la chaîne d'alimentation sans interruption par rapport aux solutions techniques actuelles,
- de déporter les baies de distribution de courant alternatif au niveau des locaux techniques plutôt que dans les salles d'équipements, ce qui va permettre de supprimer des contraintes pour l'exploitant :
   . poids des batteries en armoire,
   . effets de la température élevée sur la durée de vie des batteries lorsque la production de froid est volontairement réduite, pour réaliser des économies d'énergie,
   . risques de perturbations par rayonnement électromagnétique liés à la proximités des ASI,
   . maintien des planchers surélevés pour dissimuler les câbles de grosse section, nécessaires à la distribution sous 48V.

On connait également par le document britannique GB-A-2 184 903 une installation qui alimente sans interruption des équipements sensibles présentant une interface d'alimentation en courant. Cette installation comporte des batteries et un dispositif de commutation rapide, permettant d'assurer automatiquement le lancement d'une source de remplacement, ladite source de remplacement assurant par l'intermédiaire d'un redresseur le maintien en charge desdites batteries.

Le document EP 0 734 113 décrit un système qui exploite l'inertie du rotor, qui demeure encore en rotation, même lorsque l'alimentation principale est coupée, pour lancer un autre générateur qui assurera la fourniture électrique. De plus, on remarque dans ce document la présence d'un inverseur Normal/Secours (LCI - Load Commutated Inverter) qui réalise la commutation des réseaux, en cas de défaillance.

Ces solutions techniques de la nouvelle génération permettront d'alimenter les équipements sous 230V par des ASI déportées dans des locaux techniques, avec des câbles de distribution de faible section pouvant cheminer sur des platelages ou des caillebotis.

Les inconvénients des solutions connues à ce jour résident, d'une part principalement dans le recours à des sources de secours faisant appel à des groupes électrogènes, mûs par des groupes Diesel dont les contraintes d'exploitation ne sont pas négligeables :
- pollution de l'environnement (bruit de fonctionnement, vibrations, gaz d'échappement),
- performances médiocres et contraintes de dimensionnement,
- coût d'exploitation élevé (préchauffage, entretien...), et d'autre part dans l'emploi d'un tableau basse tension et d'un inverseur Normal/Secours (inverseur et dispositif de shuntage).

De plus, les groupes électrogènes nécessitent un système de démarrage dédié à la source de remplacement (batterie, redresseur, chargeur).

Les solutions de la génération actuelle nécessitent en plus des dispositifs de secours annexes permettant de maintenir en fonctionnement les équipements connexes (secours de la climatisation, onduleurs protégeant l'informatique contre les micro- coupures et les perturbations...).

La présente invention vise à pallier ces inconvénients en proposant un système d'Alimentation Sans Interruption qui ne comporte pas de fonction de permutation Normale/Secours entre le réseau électrique local et la source de remplacement, cette source de remplacement respectant de plus l'environnement.

A cet effet, le système qui alimente sans interruption des équipements sensibles présentant une interface d'alimentation en courant alternatif, objet de l'invention, se caractérise en ce qu'il comprend en aval d'un poste de transformation haute/basse tension, une liaison directe vers au moins une unité d'alimentation sans interruption (ASI) qui comprend des batteries en parallèle et un dispositif de commutation rapide, permettant d'assurer automatiquement le lancement ou le démarrage d'une source de remplacement (SR) en cas de défaillance du réseau local d'électricité, permettant ainsi de supprimer l'inverseur Normal/Secours de la distribution en basse tension située en amont de l'(ASI).

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue synoptique d'une chaîne d'alimentation classique de première génération ;
- la figure 2 est une vue synoptique d'une chaîne d'alimentation de la nouvelle génération comportant une Alimentation à stockage réparti Sans Interruption ;
- la figure 3 est une vue synoptique d'une chaîne d'alimentation faisant l'objet de l'invention, comportant une Architecture Simplifiée Conçue pour l'Environnement Technique et l'Energie.

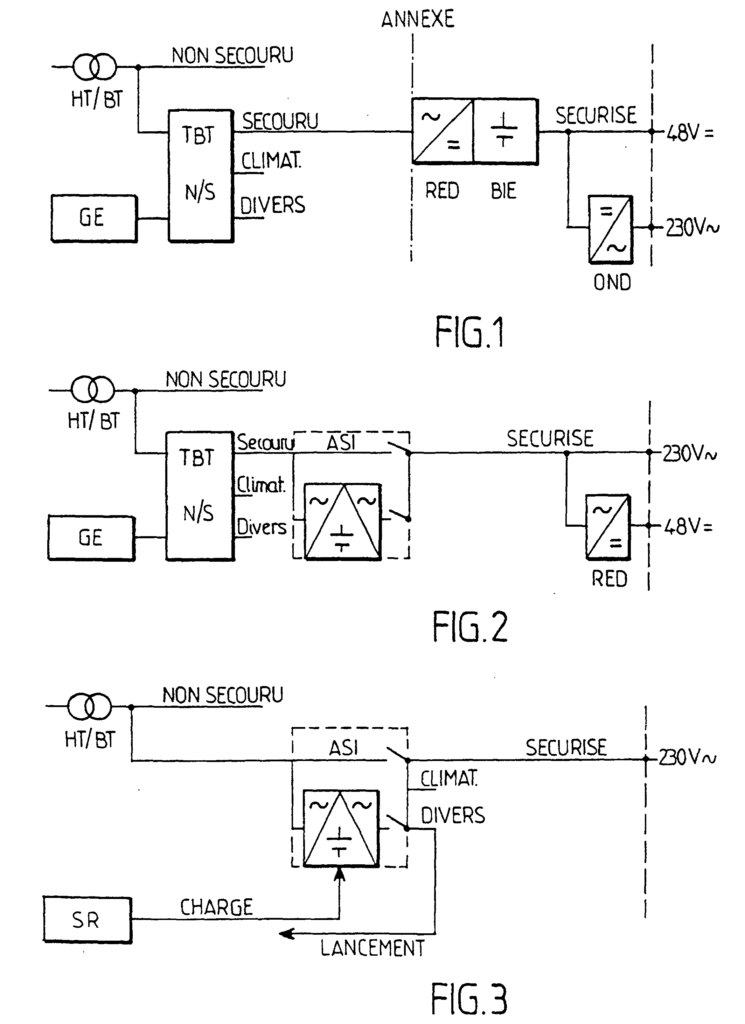

Sur la figure 1, on a représenté, par HT/BT le poste de transformation haute/basse tension, par GE le groupe électrogène chargé d'alimenter en énergie électrique l'installation en cas de défaillance du réseau électrique local, par TBT N/S la baie technique comportant en outre le tableau basse tension et le dispositif de permutation Normal/Secours, par RED BIE les redresseurs et les batteries d'accumulateurs, et par OND les onduleurs de puissance.

Sur la figure 2, on a représenté, en plus de la figure 1, par ASI une alimentation sans interruption comprenant un interrupteur à commutation rapide permettant d'alimenter sans coupure les équipements, placés en aval, à partir de l'ASI.

Sur la figure 3, on a illustré par SR les sources de remplacement permettant de recharger les batteries d'accumulateurs incluses dans l'ASI, ces dernières pouvant assurer également la mise en fonctionnement des sources de remplacement.

Sur les figures 1, 2 et 3, on a représenté par un trait mixte fin la séparation entre les locaux techniques et la salle des équipements.

Selon un mode préféré de réalisation du système d'alimentation, on connecte en aval d'un poste de transformation HT/BT d'un réseau électrique local, qui est par définition non secouru, une Alimentation Sans Interruption.

Le circuit de stockage d'énergie moyenne durée de l'ASI est associé à un dispositif de conversion banalisé (onduleur) placé en veille, qui est chargé de fournir une tension alternative sans coupure en attendant le démarrage ou la fourniture de l'énergie à l'ASI par les sources de remplacement.

Ainsi, si le réseau électrique local est coupé ou présente des défauts ou des irrégularités pendant quelques minutes, on n'observe aucune perturbation dans le fonctionnement des équipements sensibles dès lors qu'ils acceptent des microcoupures de durée inférieure à 20 ms.

De façon classique, une ASI de type "OFF-LINE" dispose d'une réserve d'énergie moyenne durée et comprend un transformateur de séparation ayant pour objectif une grande sécurité des personnes et la réalisation d'un premier filtrage des parasites du réseau. Des batteries dont la tension est comprise notamment entre 200 et 400V, assurent l'autonomie en état de veille, grâce à un un contacteur rapide permettant le basculement entre le réseau et l'onduleur.

En aval de l'ASI, c'est-à-dire en sortie de l'onduleur, on prévoit de disposer d'un coffret de distribution, sur lequel sont connectées des lignes d'alimentation que l'on veut sécuriser, ainsi sont raccordés les équipements à usage industriel qui n'acceptent ni interruption de service, ni micro-coupures supérieures à 20 ms (équipements téléphonique, informatique, climatisation, éclairage de secours...).

Selon une autre caractéristique de l'invention, une source de courant continu provenant d'une source de remplacement SR, est couplée avec les batteries constituant le stockage d'énergie dans l'ASI. Cette source de courant continu maintient la charge des batteries de l'ASI en cas de défaillance du réseau électrique local.

Ce branchement dit "en direct" permet de supprimer la fonction de permutation Normal/Secours ainsi que le tableau basse tension TBT existant dans les solutions connues de l'art antérieur (première et deuxième générations).

Selon un autre aspect de l'invention, les sources de remplacement SR sont constituées notamment par des turbogénérateurs ou par des piles à combustible, dont le démarrage, en cas de défaut constaté sur l'alimentation du réseau électrique local, est assuré par un courant provenant des batteries de l'ASI. En effet, ces batteries disposent d'une puissance élevée et le lancement ou le démarrage des sources de remplacement SR s'effectue de manière progressive, ne nécessitant qu'une faible intensité au démarrage.

Si on utilise comme source de remplacement un turbogénérateur, l'alternateur qui est préférentiellement de faible diamètre, est entraîné à une vitesse de rotation élevée et constante, grâce à l'emploi d'une turbine, et éventuellement à la même vitesse de rotation que la turbine, de manière à délivrer un courant à fréquence élevée, qui est transformé en courant continu après redressement et filtrage, et qui est apte à assurer la recharge à tension constante des batteries de l'ASI.

Si on utilise une pile à combustible comme source de remplacement, celle-ci comporte un certain nombre de piles élémentaires, montées en série, qui délivrent un courant continu sous une tension élevée qui est directement utilisable pour la recharge à tension constante des batteries intégrées dans l'ASI.

Quel que soit le type de sources de remplacement SR, les batteries sont instantanément sollicitées par l'onduleur de l'ASI en cas de défaillance du réseau électrique local, de manière à assurer une alimentation sécurisée des équipements connectés à l'ASI.

On peut également assurer la recharge des batteries de l'ASI par l'intermédiaire d'un alternateur entraîné en rotation par un groupe électrogène basse vitesse ; néanmoins, cette solution technique occasionne un surcoût compte tenu de l'adaptation nécessaire pour la production d'un courant continu.

L'invention décrite précédemment offre de multiples avantages au niveau, d'une part de la diminution des coûts d'investissement en matériel (suppression du tableau basse tension TBT, de l'inverseur Normal/Secours, suppression du système de démarrage de la source de remplacement, suppression du dispositif de secours de la climatisation, suppression des onduleurs protégeant le réseau informatique, et d'autre part de l'amélioration des conditions d'exploitation, disparition des coupures de courant lors des commutations Normal/Secours, qualité constante de l'alimentation sécurisée, autonomie de fonctionnement homogène sur le plan thermique et électrique, amélioration de la fiabilité au démarrage des sources de remplacement par une gestion optimisée des batteries intégrées dans l'ASI. De plus l'ensemble de ce système d'alimentation est intégré au sein des locaux annexes d'une installation en dehors des locaux d'exploitation, en raison de la tension distribuée qui passe de 48V (en courant continu) à 230V (en courant alternatif). Cette disposition permet de réduire la longueur de la liaison entre l'ASI et le système de démarrage.

## Revendications

1. Système qui alimente sans interruption des équipements sensibles présentant une interface d'alimentation en courant alternatif et qui comprend une source de remplacement couplée aux batteries du système et délivrant un courant continu nécessaire au maintien de la charge desdites batteries, **caractérisé en ce qu'**il comprend en aval d'un poste de transformation haute/basse tension, une liaison directe vers au moins une unité d'alimentation sans interruption (ASI) qui comprend des batteries en parallèle et un dispositif de commutation rapide, permettant d'assurer automatiquement le lancement ou le démarrage de ladite source de remplacement (SR) en cas de défaillance du réseau local d'électricité, permettant ainsi de supprimer l'inverseur Normal/Secours de la distribution en basse tension située en amont de l'alimentation sans interruption (ASI).

2. système d'alimentation sans interruption selon la revendication 1, **caractérisé en ce que** la source de remplacement (SR) est constituée par une pile à combustible, délivrant du courant continu.

3. Système d'alimentation sans interruption selon la revendication 1, **caractérisé en ce que** la source de remplacement (SR) est constituée par un turbogénérateur à vitesse de rotation élevée, délivrant du courant à fréquence élevé, transformé en courant continu par redressement.

4. Système d'alimentation sans interruption selon l'une quelconque des revendications précédentes, caractérisé en ce les batteries sollicitées par l'onduleur de l'(ASI) permettent d'assurer l'alimentation sécurisée des équipements de télécommunications, ou d'équipements informatiques, ou plus généralement tout équipement à usage industriel qui n'accepte ni interruption de service, ni de micro-coupures.

5. Système d'alimentation sans interruption selon l'une quelconque des revendications précédentes, **caractérisé en ce qu'**il est intégré au sein des locaux annexes de l'installation ainsi équipée afin de permettre de réduire la longueur de la liaison entre l'(ASI) et le système de démarrage.

## Patentansprüche

1. Elektrisches System, welches unterbrechungslos empfindliche Anlagen versorgt, mit einer Wechselstrom-Versorgungsschnittstelle und welches eine Ersatzquelle aufweist, die mit den Batterien des Systems gekoppelt ist und einen Gleichstrom liefert, der zur Aufrechterhaltung der Ladung dieser Batterien erforderlich ist, **dadurch gekennzeichnet, daß** es stromabwärts von einer Station der Transformation Hochspannung/Niederspannung eine direkte Verbindung zu mindestens einer Einheit zur unterbrechungslosen Stromversorgung (USV) aufweist, welche parallel geschaltete Batterien und eine Vorrichtung zur raschen Umschaltung aufweist, welche das automatische Einschalten oder Anlaufen der Ersatzquelle (SR) im Fall des Ausfalls des örtlichen Stromnetzes gewährleistet, wodurch der stromaufwärts von der unterbrechungslosen Stromversorgung (USV) liegende Umschalter Normal/Notstrom der Verteilung mit Niederspannung weggelassen werden kann.

2. System zur unterbrechungslosen Stromversorgung nach Anspruch 1, **dadurch gekennzeichnet, daß** die Ersatzquelle (SR) aus einer Brennstoffzelle besteht, die Gleichstrom liefert.

3. System zur unterbrechungslosen Stromversorgung nach Anspruch 1, **dadurch gekennzeichnet, daß** die Ersatzquelle (SR) aus einem Turbogenerator mit hoher Umdrehungsgeschwindigkeit besteht, der einen Wechselstrom mit hoher Frequenz liefert, der durch Gleichrichten in einen Gleichstrom transformiert wird.

4. System zur unterbrechungslosen Stromversorgung nach einem der vorangehenden Ansprüche, **dadurch gekennzeichnet, daß** die vom Wechselrichter der unterbrechungslosen Stromversorgung (USV) in Anspruch genommenen Batterien eine gesicherte Stromversorgung von Anlagen der Telekommunikation oder Informationsanlagen oder allgemein jeder Anlage mit industrieller Anwendung, welche weder eine Betriebsunterbrechung noch Mikrounterbrechungen zuläßt, gewährleisten.

5. System zur unterbrechungslosen Stromversorgung nach einem der vorangehenden Ansprüche, **dadurch gekennzeichnet, daß** es integriert ist in einen Bereich der Nebenräume der damit ausgerüsteten Anlage um eine Verringerung der Länge der Verbindung zwischen der unterbrechungslosen Stromversorgung (USV) und dem Anlaufsystem zu ermöglichen.

## Claims

1. System supplying uninterruptedly sensitive equipment having an alternating current supply interface and which comprises a replacement source which is coupled to the batteries of the system and which delivers a direct current required for maintaining the charge of said batteries, **characterized in that** it comprises, downstream of a high voltage/low voltage transformer station, a direct connection to at least one Uninterrupted Power Supply (UPS), which comprises batteries in parallel and a quick switching device, automatically ensuring the launching or triggering of said replacement source (RS) in case of breakdown of the local electricity network, thus allowing the elimination of the Normal/Standby inverter (load commutated inverter) for low voltage transmission situated upstream of the Uninterrupted Power Supply (UPS).

2. Uninterrupted power supply system according to claim 1, **characterized in that** the replacement source (RS) is constituted by a fuel cell, delivering direct current.

3. Uninterrupted power supply system according to claim 1, **characterized in that** the replacement source (RS) is constituted by a high speed rotation turbogenerator, delivering high frequency current, transformed into direct current by rectification.

4. Uninterrupted power supply system according to any one of the preceding claims, **characterized in that** the batteries required by the inverter of the (UPS) allow a secure supply to be ensured for telecommunications equipment, or for computer equipment, or more generally any equipment with an industrial application which cannot tolerate service outages or power line disturbances.

5. Uninterrupted power supply system according to any one of the preceding claims, **characterized in that** it is integrated within premises annexed to the installation thus equipped in order to allow a reduction in the length of the connection between the (UPS) and the triggering system.
